# EUROPÄISCHE PATENTANMELDUNG

(11) **EP 1 720 040 A2**
(43) Veröffentlichungstag der Anmeldung: **08.11.2006**
(21) Anmeldenummer: 06112591.0
(22) Anmeldetag: 13.04.2006
(51) Int. Cl.: G01S 17/89, G01S 17/08, G01S 7/51

(54) **Leicht handhabbares Vermessungsdokumentationssystem**

(30) Priorität: 29.04.2005 DE 102005000047
(71) Anmelder: HILTI Aktiengesellschaft, 9494 Schaan (LI)
(72) Erfinder: Waibel, Reinhard, 9442 Berneck (CH)
(74) Vertreter: Wildi, Roland

(57) **Zusammenfassung**

Ein handhabbarer Computer (2), welcher bidirektional kommunizierend mit einem optoelektronischen Entfernungsmessgerät (3) integriert verbunden ist oder über eine Datenschnittstelle (26) mit diesem verbindbar ist, mit einem Rechenmittel (7) und für die Markierung / Anzeige eines graphischen Objekts (4) geeigneten Eingabemittel (5) /Ausgabemittel (6), wobei ein zur Interaktion mit dem optoelektronischen Entfernungsmessgerät (3) ausgebildeter Algorithmus (8), in mehrfach wiederholter Folge in einem Markierungsschritt (10) auf ein, durch den Nutzer bei einer Markierung eines im Ausgabemittel (6) angezeigten Objekts (4) einer bildlichen Darstellung (24) mittels des Eingabemittels (5) ausgelöstes, Markierungsereignis (12) hin sowie in einem zeitlich benachbarten Vermessungsschritt (11) auf ein, durchein durch den Nutzer mittels des optoelektronischen Entfernungsmessgerätes (2) gemessenes Vermessungsergebnis (15) ausgelöstes, Vermessungsereignis (13) hin wartet, woraufhin in einem späteren Zuordnungsschritt (14) das Vermessungsergebnis (15) dem markierten Objekt (4) zugeordnet wird.

## Beschreibung

Die Erfindung bezeichnet ein handhabbares Vermessungsdokumentationssystem basierend auf einem handhabbaren Computer, insbesondere zur Verwendung im Baugewerbe, sowie einen zugeordneten Programmalgorithmus.

Bei der Erfassung von Vermessungsergebnis, insbesondere von Distanzen, Flächen, Volumen zur Beschreibung einer Bausituation wird heute meist eine Handskizze als Abbildung der Bausituation gefertigt, in der dann die gemessenen Vermessungsergebnis notiert und geometrischen Objekten zugeordnet werden. Verschiedentlich wird auch zusätzlich eine digitale Fotoaufnahme der Bausituation zwecks Dokumentation gemacht. Dieser Vorgang ist mühsam, fehlerhaft und kostspielig sowie nicht elektronisch weiterverwendbar und aufwendig.

Nach der DE10055510 ist ein handhabbares Laserentfernungsmessgerät bekannt, das mit einer optischen Kamera zur Aufnahme der Messsituation längs der Visierlinie verbunden ist, sowie den parallaxenfreien, real vermessenen Messpunkt im Foto markiert. Zur Dokumentation und Weiterverarbeitung sind die Daten (Foto mit Messpunkt und Messergebnis) über eine Datenschnittstelle auf einen externen Computer übertragbar. Ein derartiges System eignet sich zwar zur Vermessungsdokumentation einer Einzelmessung entlang der Visierlinie des Laserentfernungsmessgerätes, jedoch prinzipiell nicht zur Vermessungsdokumentation einer räumlich zusammenhängenden Bausituation, das aus einer Vielzahl von Einzelmessungen zu unterschiedlichen Zielpunkten von unterschiedlichen Referenzpunkten besteht.

Nach der W02004036246 ist ein handhabbares Laserentfernungsmessgerät bekannt, das in einem handhabbaren Computer integriert oder über eine Datenschnittstelle mit diesem verbunden ist, wobei das Keyboard und das Display des Computers zur Interaktion mit dem Laserentfernungsmessgerät benutzt werden. In Weiterbildungen ist im handhabbaren Computer auch eine optische Kamera integriert. Ein Programmalgorithmus zur Steuerung des Laserentfernungsmessgerätes vom handhabbaren Computer aus ist vorhanden. Die Vermessungsergebnisse sind im Nachgang am handhabbaren Computer weiterverarbeitbar. Ein effizienter Programmalgorithmus für ein Vermessungsdokumentationssystem wird nicht näher beschrieben. Insbesondere ist eine zuverlässige Dokumentation der Vermessungsergebnisse jeder Einzelmessung nicht sichergestellt. Gerade beim Einsatz von Hilfskräften im Baugewerbe ist eine intuitiv einfache und dennoch zuverlässige Erfassung einer Bausituation wichtig.

Die Aufgabe der Erfindung besteht in der Realisierung eines intuitiv einfach zu handhabbaren Vermessungsdokumentationssystems basierend auf einem handhabbaren Computer sowie eines effizienten und zuverlässigen Programmalgorithmus dafür.

Die Aufgabe wird im Wesentlichen durch die Merkmale der unabhängigen Ansprüche gelöst. Vorteilhafte Weiterbildungen ergeben sich aus den Unteransprüchen.

So weist ein handhabbarer Computer, welcher bidirektional kommunizierend mit einem optoelektronischen Entfernungsmessgerät integriert verbunden ist oder über eine Datenschnittstelle mit diesem verbindbar ist, für die Markierung / Anzeige eines graphischen Objekts geeignete Eingabemittel / Ausgabemittel sowie ein Rechenmittel mit einem zur Interaktion mit dem optoelektronischen Entfernungsmessgerät ausgebildeten Algorithmus auf.

Im vom Rechenmittel abgearbeiteten Algorithmus wird in mehrfach wiederholter Folge in einem Markierungsschritt auf ein, durch den Nutzer bei einer Markierung eines im Ausgabemittel angezeigten Objekts einer bildlichen Darstellung (Foto, CAD-Darstellung, Skizze) mittels des Eingabemittels ausgelöstes, Markierungsereignis hin sowie in einem zeitlich (vorgelagert oder nachgelagert) benachbarten Vermessungsschritt auf ein, durch den Nutzer mittels des optoelektronischen Entfernungsmessgerätes gemessenes Vermessungsergebnis ausgelöstes, Vermessungsereignis hin gewartet, woraufhin in einem späteren Zuordnungsschritt das Vermessungsergebnis dem markierten Objekt zugeordnet wird.

Durch diesen Algorithmus ist der Nutzer sowohl intuitiv angehalten als auch praktisch gezwungen, jede Einzelmessung zuvor in der bildlichen Darstellung der Bausituation mittels eines Objektes zu markieren. Verwechslungen oder Fehlzuordnungen, wie sie insbesondere bei einer späteren Nachbearbeitung erfolgen könnten, sind somit praktisch ausgeschlossen.

Vorteilhaft wird im Markierungsschritt ein bereits als graphisches Grundelement (Linie, Kurve, Vieleck, Kreis, etc.) in der bildlichen Darstellung enthaltenes Objekt durch Anklicken markiert, wodurch ein Objekt mittels eines geeigneten graphischen Eingabemittels (Kursor, Eingabestift, Touchscreen, etc.) schnell und intuitiv markierbar ist.

Vorteilhaft wird beim Anklicken eines Gebietes ohne graphisches Grundelement in einem vorgelagerten Vektorisierungsschritt eine Bildinformation dieses Gebietes nach dem Vorhandensein einfacher graphischer Grundelemente analysiert und diese als Objekte angelegt, wodurch aus der Bildinformation automatisch zum Anklicken geeignete Objekte generiert werden. Dafür geeignete Vektorisierungsalgorithmen, die als solche nicht Gegenstand der Erfindung sind, sind Bestandteil üblicher Bildbearbeitungsprogramme von Computern.

Vorteilhaft wird als Objekt ein mit dem Eingabemittel neu gezeichnetes Zeichnungsobjekt markiert, wodurch einfach und intuitiv ein Objekt in die bildliche Darstellung der Bausituation eingefügt werden kann, bspw. als Freihandzeichnung mit dem Eingabestift eines handhabbaren Computers.

Vorteilhaft wird im Vermessungsschritt in einem vorgelagerten Modischaltschritt das optoelektronische Entfernungsmessgerät in einem objektspezifischen Messmode initialisiert, insbesondere bei Linien: Distanzmessung, bei Flächen: Flächenmessung (Multiplikation zweier Einzelmessungen), bei Körpern: Volumenmessung (Multiplikation dreier Einzelmessungen), wodurch Fehlbedienungen durch den Nutzer praktisch vermieden werden.

Vorteilhaft wird im Zuordnungsschritt das Vermessungsergebnis als angezeigter Zahlenwert nahe dem Mittelpunkt des markierten Objekts zugeordnet, wodurch je Einzelmessung die Zuordnung des Vermessungsergebnis zum vermessenen Objekt intuitiv erkennbar ist.

Vorteilhaft wird in einem vorgelagerten Initialisierungsschritt ein neues Vermessungsprotokoll initialisiert und mittels zwingend vom Nutzer abgefragter Eingabefelder sowie geräteinternen Daten (Gerätenummer, Datum, Uhrzeit, etc.) ausgefüllt, wodurch die zur Dokumentation benötigten Protokolldaten stets vorhanden sind.

Vorteilhaft wird im Initialisierungsschritt die bildliche Darstellung erfasst, weiter vorteilhaft über eine im handhabbaren Computer oder im optoelektronischen Entfernungsmessgerät integrierte Kamera, wodurch eine weitere bildliche Dokumentation der Bausituation entfallen kann.

Vorteilhaft wird in einem anschliessenden Signatursschritt das Vermessungsprotokoll mit den Protokolldaten, der bildlichen Darstellung sowie den jeweils Objekten zugeordneten Vermessungsergebnis mittels einer zwingend vom Nutzer abgefragten Signatur signiert und abgespeichert, wodurch es als komplettes elektronisches Vermessungsdokument zur Weiterverarbeitung und Archivierung hergerichtet ist.

Die Erfindung wird bezüglich zweier vorteilhafter Ausführungsbeispiele näher erläutert mit:
Fig. 1 als Vermessungsdokumentationssystem
Fig. 2 als Algorithmus
Fig. 2a als Teilvariante
Fig. 3 als elektronisches Vermessungsdokument

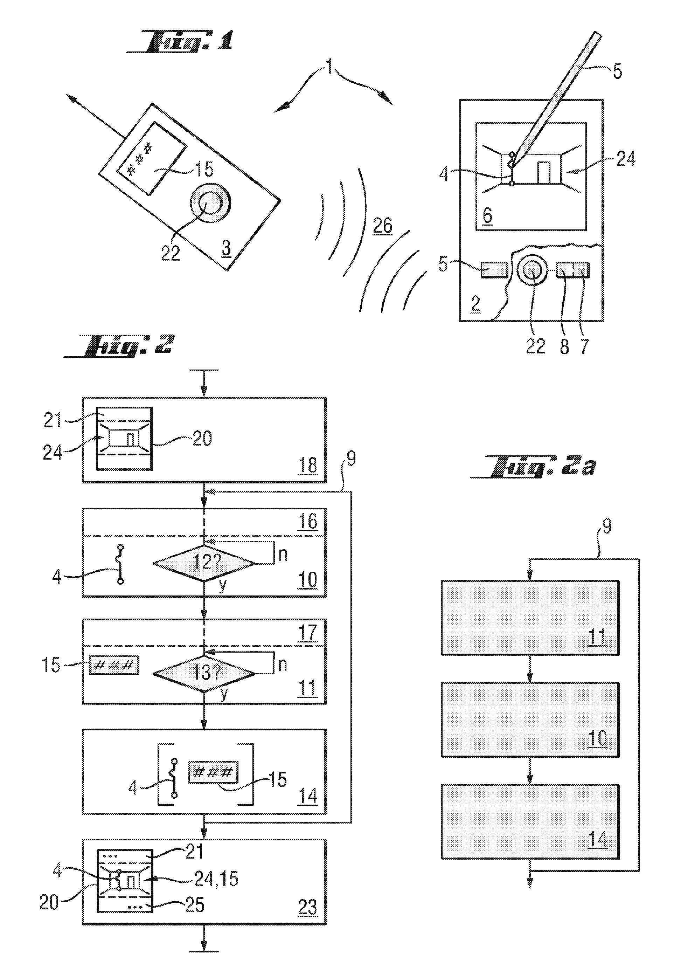

Nach Fig. 1 besteht das Vermessungsdokumentationssystem 1 aus einem handhabbaren Computer 2, welcher über eine drahtlose Datenschnittstelle 26 in Form von elektromagnetischen Wellen bidirektional kommunizierend mit einem handhabbaren optoelektronischen Entfernungsmessgerät 3 in Form eines Laserentfernungsmessers integriert verbunden ist. Im Inneren des handhabbaren Computers 2 ist ein Rechenmittel 7 mit einem zur Interaktion mit dem optoelektronischen Entfernungsmessgerät ausgebildeten Algorithmus 8 vorhanden. Der als PDA (Personal Digital Assistent) ausgebildete handhabbare Computer 2 weist für die Markierung / Anzeige eines graphischen Objekts 4 geeignete Eingabemittel 5 in Form eines Eingabestiftes und Ausgabemittel 6 in Form eines graphischen Displays auf, welches die über eine im handhabbaren Computer 2 (bzw. im Entfernungsmessgerät 3) integrierte Kamera 22 erfasste Bausituation als bildliche Darstellung 24 anzeigt. Ein gerade mit dem Eingabemittel 5 neu gezeichnetes Zeichnungsobjekt ist dabei als Objekt 4 markiert. Eine diesem Objekt 4 zugeordnete Vermessung mit dem optoelektronischen Entfernungsmessgerät 3 lieferte das Vermessungsergebnis 15.

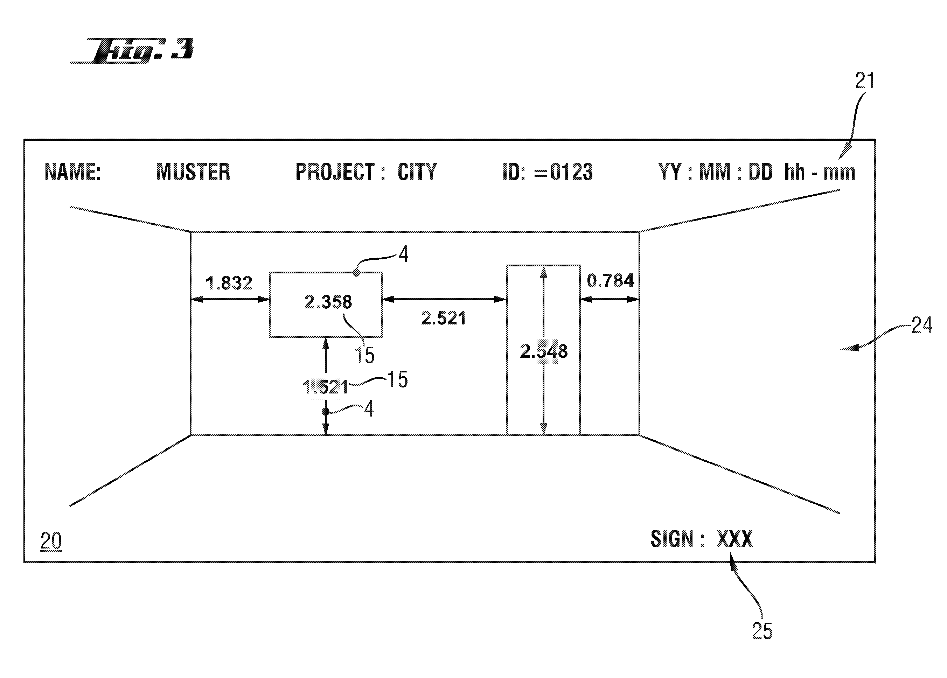

Nach Fig. 2 weist der zeitlich modular aufgebaute Algorithmus 8 eine Schleife 9 auf, in der in mehrfach wiederholter Folge ein Markierungsschritt 10 und ein Vermessungsschritt 11 ausgeführt wird. Dabei wird nach Fig. 2 der Markierungsschritt 10 vor dem Vermessungsschritt 11 ausgeführt. Bei der nach Fig. 2a angedeuteten alternativen Teilvariante wird der Vermessungsschritt 11 vor dem Markierungsschritt 10 ausgeführt. In dem Markierungsschritt 10 wird auf ein Markierungsereignis 12 gewartet, welches durch den Nutzer bei einer Markierung durch Anklicken eines im Ausgabemittel angezeigten Objekts 4 einer bildlichen Darstellung 24 mittels des Eingabemittels ausgelöst wird. In dem Vermessungsschritt 11 wird auf ein Vermessungsereignis 13 gewartet, welches durch ein vom Nutzer mittels des optoelektronischen Entfernungsmessgerätes gemessenes Vermessungsergebnis 15 ausgelöst wird. In einem späteren Zuordnungsschritt 14 wird ein Vermessungsergebnis 15 dem markierten Objekt 4 zugeordnet. Dem Markierungsschritt 10 ist ein optional ausgeführter Vektorisierungsschritt 16 vorgelagert, der beim Anklicken eines Gebietes ohne graphisches Grundelement mittels Vektorisierungsalgorithmen eine Bildinformation dieses Gebietes nach dem Vorhandensein einfacher graphischer Grundelemente analysiert und diese als Objekte 4 anlegt. In Fig. 2 ist dem Vermessungsschritt 11 ein optional ausgeführter Modischaltschritt 17 vorgelagert, welcher das optoelektronische Entfernungsmessgerät in einem objektspezifischen Messmode initialisiert. In einem der Schleife 9 vorgelagerten Initialisierungsschritt 18 wird ein neues Vermessungsprotokoll 20 initialisiert und mittels zwingend vom Nutzer abgefragter Eingabefelder: Name, Projekt sowie geräteinternen Daten: Geräte-ID, Datum, Uhrzeit die Protokolldaten 21 ausgefüllt. Zudem wird im Initialisierungsschritt 18 über die im handhabbaren Computer 2 integrierte Kamera 22 (Fig.1) die bildliche Darstellung 24 der Bausituation erfasst. In einem an die Schleife 9 anschliessenden Signatursschritt 23 wird das Vermessungsprotokoll 20 mit den Protokolldaten 21, der bildlichen Darstellung 24 sowie den jeweiligen Objekten 4 zugeordneten Vermessungsergebnissen 15 mittels einer zwingend vom Nutzer abgefragten Signatur 25 signiert und abgespeichert.

Nach Fig. 3 weist ein komplettes elektronisches Vermessungsprotokoll 20 die Protokolldaten 21, die bildliche Darstellung 24 der Bausituation und die Signatur 25 auf. Für jede Einzelmessung (Distanz, Fläche) ist das Vermessungsergebnis 15 als numerisch angezeigter Zahlenwert nahe dem Mittelpunkt des markierten Objekts 4 zugeordnet.

## Patentansprüche

1. Handhabbarer Computer, welcher bidirektional kommunizierend mit einem optoelektronischen Entfernungsmessgerät (3) integriert verbunden ist oder über eine Datenschnittstelle (26) mit diesem verbindbar ist, mit einem Rechenmittel (7) sowie einem zur Interaktion mit dem optoelektronischen Entfernungsmessgerät (3) ausgebildeten Algorithmus (8), **dadurch gekennzeichnet, dass** für die Markierung / Anzeige eines graphischen Objekts (4) geeignete Eingabemittel (5) / Ausgabemittel (6) vorhanden sind.

2. Algorithmus zur Ausführung mit dem Rechenmittel (7) des handhabbaren Computers (2) nach Anspruch 1, **dadurch gekennzeichnet, dass** in mehrfach wiederholter Folge in einem Markierungsschritt (10) auf ein, durch den Nutzer bei einer Markierung eines im Ausgabemittel (6) angezeigten Objekts (4) einer bildlichen Darstellung (24) mittels des Eingabemittels (5) ausgelöstes, Markierungsereignis (12) hin sowie in einem zeitlich benachbarten Vermessungsschritt (11) auf ein, durch den Nutzer mittels des optoelektronischen Entfernungsmessgerätes (2) gemessenes Vermessungsergebnis (15) ausgelöstes, Vermessungsereignis (13) hin gewartet wird, woraufhin in einem späteren Zuordnungsschritt (14) das Vermessungsergebnis (15) dem markierten Objekt (4) zugeordnet wird.

3. Algorithmus nach Anspruch 2, **dadurch gekennzeichnet, dass** im Markierungsschritt (10) ein bereits als graphisches Grundelement in der bildlichen Darstellung (24) enthaltenes Objekt (4) durch Anklicken markiert wird.

4. Algorithmus nach Anspruch 3, **dadurch gekennzeichnet, dass** im Markierungsschritt (10) beim Anklicken eines Gebietes ohne graphisches Grundelement in einem vorgelagerten Vektorisierungsschritt (16) eine Bildinformation dieses Gebietes nach dem Vorhandensein eines einfachen graphischen Grundelementes analysiert und dieses als Objekt (4) angelegt wird.

5. Algorithmus nach einem der Ansprüche 2 bis 4, **dadurch gekennzeichnet, dass** als Objekt (4) ein mit dem Eingabemittel (5) neu gezeichnetes Zeichnungsobjekt markiert wird.

6. Algorithmus nach einem der Ansprüche 2 bis 5, **dadurch gekennzeichnet, dass** im Vermessungsschritt (11) in einem vorgelagerten Modischaltschritt (17) das optoelektronische Entfernungsmessgerät (2) in einem objektspezifischen Messmode initialisiert wird.

7. Algorithmus nach einem der Ansprüche 2 bis 6, **dadurch gekennzeichnet, dass** im Zuordnungsschritt (14) das Vermessungsergebnis (15) als angezeigter Zahlenwert nahe dem Mittelpunkt des markierten Objekts (4) zugeordnet wird.

8. Algorithmus nach einem der Ansprüche 2 bis 7, **dadurch gekennzeichnet, dass** in einem vorgelagerten Initialisierungsschritt (18) ein neues Vermessungsprotokoll (20) initialisiert und mittels zwingend vom Nutzer abgefragte Eingabefelder sowie geräteinternen Daten ausgefüllt wird.

9. Algorithmus nach Anspruch 8, **dadurch gekennzeichnet, dass** im Initialisierungsschritt (18) die bildliche Darstellung (24) erfasst wird, optional über eine im handhabbaren Computer (2) oder im optoelektronischen Entfernungsmessgerät (3) integrierte Kamera (22).

10. Algorithmus nach einem der Ansprüche 8 oder 9, **dadurch gekennzeichnet, dass** in einem anschliessenden Signatursschritt (23) das Vermessungsprotokoll (20) mit den Protokolldaten (21), der bildlichen Darstellung (24) sowie den jeweils einem Objekt (4) zugeordneten Vermessungsergebnis (15) mittels einer zwingend vom Nutzer abgefragten Signatur (25) signiert und abgespeichert wird.
